(19) Europäisches Patentamt
European Patent Office
Office européen des brevets

(11) EP 0 909 799 B1

(12) EUROPEAN PATENT SPECIFICATION

(45) Date of publication and mention of the grant of the patent:
**25.06.2003 Bulletin 2003/26**

(21) Application number: **98907268.1**

(22) Date of filing: **17.03.1998**

(51) Int Cl.[7]: **C09D 11/10**, B41M 5/20, B41C 1/10

(86) International application number:
**PCT/JP98/01122**

(87) International publication number:
**WO 98/041587 (24.09.1998 Gazette 1998/38)**

(54) **ELECTROCOAGULATION PRINTING INK**

ELEKTROCOAGULATIONSDRUCKTINTE

ENCRE D'IMPRESSION PAR ELECTROCOAGULATION

(84) Designated Contracting States:
**DE FR GB IT**

(30) Priority: **17.03.1997 CA 2200143**
**25.08.1997 CA 2213927**

(43) Date of publication of application:
**21.04.1999 Bulletin 1999/16**

(73) Proprietor: **Toyo Ink Manufacturing Co. Ltd.**
**Tokyo 104-0031 (JP)**

(72) Inventors:
- **CASTEGNIER, Adrien**
**Qutremont, Québec H2V 2Z2 (CA)**
- **NORMAND, Lepine**
**Pointe-aux-Trembles, Québec H1B 3J7 (CA)**

(74) Representative: **Koepe, Gerd L., Dipl.-Chem.**
**Koepe & Partner**
**Robert-Koch-Strasse 1**
**80538 München (DE)**

(56) References cited:
**EP-A- 0 899 094**
**WO-A-95/23038**
**WO-A-96/18507**
**AU-A- 5 933 094**
**JP-A- 4 504 688**
**JP-A- 5 148 440**
**JP-A- 62 240 582**

- **KIRK-OTHMER: "Encyclopedia of Chemical Technology", 1997, JOHN WILEY & SONS, NEW YORK**

Remarks:
•A request for correction of the description has been file.
•The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention pertains to improvements in the field of electrocoagulation printing. More particularly, the invention relates to an improved electrocoagulation printing ink.

In U.S. Patent N° 4,895,629 of January 23, 1990, there is disclosed a high-speed electrocoagulation printing method and apparatus in which use is made of a positive electrode in the form of a revolving cylinder having a passivated surface onto which dots of colored, coagulated ink representative of an image are produced. These dots of colored, coagulated ink produced on the passivated surface are thereafter contacted with a substrate such as paper to cause transfer of the colored, coagulated ink onto the substrate and thereby imprint the substrate with the image. As explained in this U.S. patent, the positive electrode is coated with an oily substance so as to form micro-droplets of oily substance on the surface of the positive electrode prior to electrical energization of the negative electrodes in order to weaken the adherence of the dots of coagulated ink to the positive electrode and also to prevent an uncontrolled corrosion of the positive electrode.

The electrocoagulation printing ink which is used to fill the gap defined between the positive and negative electrodes consists essentially of a solution or a dispersion containing an electrolytically coagulable polymer, a liquid medium, a soluble electrolyte and a coloring agent. The coloring agent can be a dye or a pigment. After coagulation of the ink, any remaining non-coagulated ink is removed from the surface of the positive electrode, for example, by scraping the surface with a soft rubber squeegee, so as to fully uncover the colored, coagulated ink which is thereafter transferred onto the substrate. The surface of the positive electrode is thereafter cleaned by means of a brush and a cleaning liquid to remove any remaining coagulated ink adhered to the surface of the positive electrode.

The document WO 96/18507 discloses an electrocoagulation printing ink which may contain a dispersing agent for uniformly dispersing the pigment into the dispersion. Nonionic and anionic dispersing agents may be used. Document JP-A 4-504,688 (corresponding to document WO 90/11897) discloses the same dispersing agents as the previously mentioned document.

The document "Kirk-Othmer, Encyclopedia of Chemical Technology, 1997, J. Wiley & Sons, New York, Vol. 23, pages 205 to 206" does disclose that condensation products of formaldehyde and naphthalenesulfonic acid sodium salt are used as a dispersing agent in dyestuff manufacture.

Where the coloring agent used is a pigment, it is necessary to add a dispersing agent for uniformly dispersing the pigment into the electrocoagulation printing ink. When using dispersing agents such as the non-ionic dispersing agent sold by ICI Canada Inc. under · the trademark SOLSPERSE® 2 7000, Inventors have observed that the pigment particles settle out after the ink has been left standing for more than 24 h, resulting in a phase separation requiring mechanical agitation to re-disperse the pigment in the ink. The use of such a dispersing agent has also been found to cause an increase in the viscosity of the ink to 500 mPas (500 cps) or greater, as well as formation on the electrocoagulation printed images of an undesirable colored background having an optical density as high as 0.07. In addition, gas generated as a result of electrolysis upon energizing the negative electrodes causes defects on the images. Incidentally, the optical density of the coagulated ink containing this dispersing agent ranges from about 1.20 to about 1.25.

It is therefore an object of the present invention to overcome the above drawbacks and to provide an improved electrocoagulation printing ink which has an increased shelf-life and a viscosity in the range of about 300 to 400 mPas (300 to 400 cps), and which enables one to increase the optical density of the coagulated ink and to reduce the undesirable colored background on electrocoagulation printed image as well as the defects on the image caused by gas generation at the negative electrodes.

An electrocoagulation printing ink according to the present invention consists essentially of a liquid dispersion containing an electrolytically coagulable polymer, a liquid medium, a soluble electrolyte, a pigment and a dispersing agent, wherein said dispersing agent is an alkali metal salt of a naphthalenesulfonic acid-formaldehyde-polycondensate of the chemical formula (I):

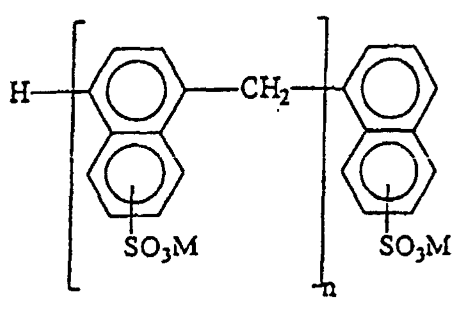

(I)

in which M is an alkali metal and n is an integer ranging from 2 to 15.

Inventors have found that by selecting as the aforesaid dispersing agent a naphthalenesulfonic acid-formamide polycondensate alkali metal salt of the general formula (I), the shelf-life of the electrocoagulation printing ink is increased to at least several months, the ink viscosity ranges from 300 to 400 m Pas (300 to about 400 cps), and it is possible to reduce the defects on the image caused by gas generation at the negative electrodes. Moreover, the use of the alkali metal salt of a naphthalenesulfonic acid-formamide polycondensate enables one to increase the optical density of the coagulated ink to 1.40 to 1.50, to reduce the optical density of the undesirable colored background on electrocoagulation printed images to 0.02.

The present invention also includes an electrocoagulation printing method. The expression "electrocoagulation printing" as used herein refers to the entire printing process by which an image is reproduced by electrocoagulation of printing ink containing electrolytically coagulable polymer and the image thus reproduced is transferred onto a substrate, such as printing paper. The entire printing process thus includes the steps of; (a) cleaning the positive electrode surface, (b) coating the positive electrode surface with an oily substance, (c) filling the electrode gap with the printing ink of the invention, (d) electrically energizing selected negative electrodes to form on the positive electrode surface coated with micro-droplets of the oily substance a series of dots of coagulated ink representative of a desired image, (e) removing any remaining non-coagulated ink from the positive electrode surface and (f) contacting the dots of coagulated ink with a substrate to cause transfer of the coagulated ink onto the substrate.

The expression "electrocoagulation of the printing ink" as used herein refers only to step (d) of the above process, which involves breakdown of the passive oxide film on the positive electrode surface, release of multivalent metal ions from the positive electrode surface, coagulation of the electrolytically coagulable polymer in the ink by the multivalent metal ions, and formation of dots of coagulated ink on the positive electrode surface.

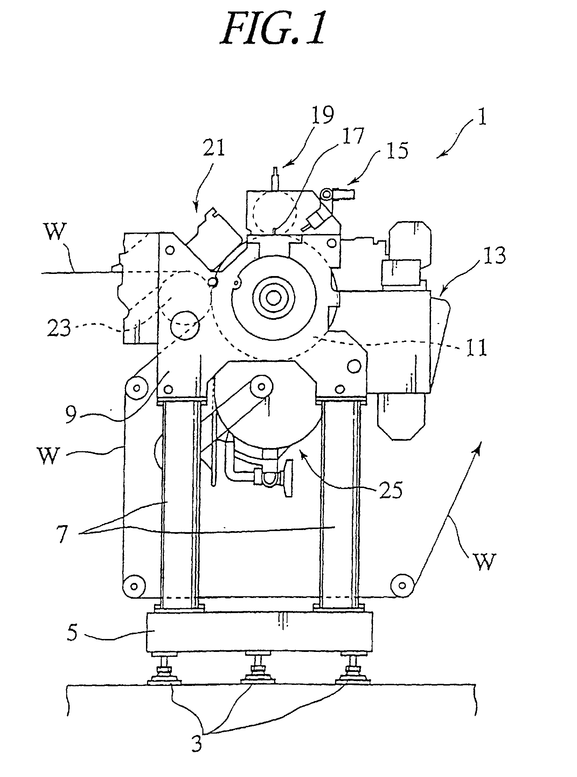

Figure 1 shows an example of an electrocoagulation printing apparatus in which the electrocoagulation printing ink of the present invention is utilized.

A pigment used in the electrocoagulation printing ink of the invention can be organic and inorganic pigments generally used in printing ink or coating material. Examples of suitable organic pigments include azo pigments, phthalocyanine pigments, anthraquinone pigments, perylene pigments, perynone pigments, quinacridone pigments, thioindigo pigments, dioxazine pigments, isoindolinone pigments, quinophthalone pigments, azomethineazo pigments, diketopyrrolopyrrole pigments and isoindoline pigments. Examples of inorganic pigments include carbon black, titanium oxide and iron oxide red.

For a black ink, the use of carbon black is preferable. Especially, the use of carbon black having an oil absorption of 80 to 200ml/100g and an average particle diameter of 35 to 100nm enables one to produce a printed matters colored in bluish deep black. As a carbon black, for example, use can be made of Carbon Black Monarch® 120 which are available from CABOT CORP.

For a cyan ink, copper-phthalocyanine organic pigments, such as Hostaperm® Blue B2G or B3G, can be preferably used. Preferably, use can be made of those available from HOECHST such as Permanent Rubine F6B or L6B for a magenta ink and Permanent Yellow DGR or DHG for a yellow ink. These pigments are used in an amount necessary in producing the dots of coagulated ink by electrocoagulation with a sufficient density, preferably in an amount of 5 to 20% by weight, or more preferably, in an amount of 6.5 to 15% by weight, based on the total weight of the ink.

An alkali metal salt of a naphthalenesulfonic acid-formamide polycondensate as a dispersing agent is a compound of the chemical formula (I) :

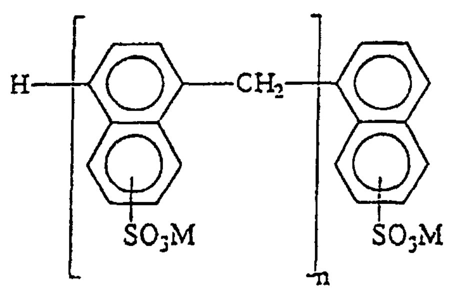

Chemical Formula (I)

in which M is an alkali metal and n is an integer ranging from 2 to 15.

In the formula (I), it is particularly preferable to have sodium as M and n in a range of 5 to 12, or more preferably, n in a range of 7 to 10. The alkali metal salt of a naphthalenesulfonic acid-formamide polycondensate is preferably

used in an amount of 0.05 to 5% by weight, or more preferably, in an amount of 0.1 to 2% by weight, based on the total weight of the ink. When the amount of the dispersing agent is under 0.05% by weight based on the total weight of the ink, the shelf life of the ink tends to decrease, whereas when the amount of the dispersing agent is over 5% by weight based on the total weight of the ink, the density of the coagulated dots transferred onto substrate tends to decrease. There is a tendency for the viscosity of the ink to increase, when the amount of the dispersing agent is over 2% by weight based on the total weight of the ink, especially when carbon black is used as the pigment. The dispersing agent specified by formula (I) in which M is sodium and n is 7 is sold by Boehme Filatex Canada Inc. under the trademark CLOSPERSE 2500 which has an average molecular weight of about 2000.

The alkali metal salt of a naphthalenesulfonic acid-formamide polycondensate is preferable from the viewpoint that it shows a good pigment dispersibility when added to the ink and that it does not decrease surface tension of the ink. Namely, because the decrease of surface tension of the ink causes the decrease of contact angle between the positive electrode surface and the ink, which can make it easier to wet the positive electrode surface, there is a tendency for the removal of the remaining non-coagulated ink on the positive electrode surface to become difficult and an undesirable colored background to form. Thus, the surface tension of the ink is an important factor, and preferably it is at least $30 \cdot 10^{-5}$ N/cm (30 dyne/cm) (at 25 °C) or greater.

The surface tension of the ink is generally as high as 35 to $75 \cdot 10^{-5}$ N/cm (35 to 75 dyne/cm) (at 25°C) when this dispersing agent is added by the above described amount to the ink.

An electrolytically coagulable polymer used in the electrocoagulation printing ink is capable of making chemical bonding with multivalent metal ions and contains a functional group such as an amido group, an amino group and a carboxyl group. The polymer has a molecular weight preferably between about 10,000 and about 1,000,000, or more preferably between 100,000 and 600,000. Examples of suitable polymers include natural polymers such as albumin, gelatin, casein and agar, and synthetic polymers such as polyacrylic acid, polyacrylamide and polyacrylic acid hydrazide. A particularly preferred polymer is a linear anionic acrylamide polymer, and ACCOSTRENGTH® 86 sold by Cyanamid Inc., for example, can be used. The polymer is preferably used in an amount of 4 to 15% by weight, and more preferably in an amount of 6 to 12% by weight, based on the total weight of the ink.

A soluble electrolyte used in the electrocoagulation printing ink is added in order to increase an electric conductivity of the ink and cause a desired breakdown of passive oxide film on the positive electrode surface. Preferred electrolytes include halide, especially chloride. Examples of alkali metal halides and alkaline earth metal halides include lithium chloride, sodium chloride, potassium chloride and calcium chloride. Use can also be made of ammonium chloride, nickel chloride, copper chloride and manganese chloride.

An electric conductivity of the electrocoagulation printing ink ranges preferably from 1 to 200mS/cm (at 25°C). When the electric conductivity of the ink is under 1mS/cm, the optical density of the coagulated ink transferred onto the substrate decreases. Accordingly, the electrolyte is added in such an amount that the electric conductivity of the ink falls within the above range. In general, the electrolyte is preferably used in an amount of 5 to 10% by weight, or more preferably in an amount of 6 to 9% by weight, based on the total weight of the ink.

According to a preferred embodiment of the invention, the ink further includes a sequestering agent for complexing metal ions generated from the positive electrode during electrocoagulation printing. The sequestering agent is used in a range of not causing undesirable increase in viscosity of the ink by the metal ions, without adversely affecting electrocoagulation of the electrolytically coagulable polymer.

Where a positive electrode made of stainless steel or aluminum is utilized in the electrocoagulation printing method, breakdown of the passive oxide film on such an electrode caused by electrical energization generates $Fe^{3+}$ or $Al^{3+}$ ions. The trivalent ions $Fe^{3+}$ or $Al^{3+}$ make crosslinking with polymer, particularly with polymer like polyacrylamide, to form dots on the positive electrode, but on the other hand, they may cause an increase in viscosity of the ink.

After electrocoagulation, any remaining non-coagulated ink is removed from the positive electrode surface by a system for removing it, for example, by scraping the surface with a soft rubber squeegee and recirculated back to the ink discharge unit. However, since the collected non-coagulated ink contains a small amount of the dots of coagulated ink, the ink is contaminated with ferric or aluminium ion and the concentration of these metal ions increases in time during electrocoagulation printing. Furthermore, some substrates onto which the dots of coagulated ink are transferred contain multivalent metal ions and these may be released onto the positive electrode surface upon contact of the substrate with the latter to contaminate the ink.

All these metal ions crosslink the polymer contained in the ink, resulting in a viscosity increase leading to an ultimate gelation of the ink.

Accordingly, it suffices to mask these metal ions in order to prevent the metal ions mixed in the ink during electrocoagulation from causing undesirable increase in viscosity of the ink. The amount of sequestering agent necessary to mask such metal ions depends on the concentration of the metal ions which cause the undesirable increase in viscosity of the ink and the type of sequestering agent used, as well as on the type of polymer contained in the ink.

The amount of sequestering agent added should not be so large as to adversely affect the electrocoagulation of the polymer, since much sequestering agent would also complex the metal ions which are released from the positive

electrode surface during passive film breakdown and which are essential to the coagulation of the polymer, resulting in difficulty of coagulation.

When the concentration of the metal ions such as ferric ions which cause the polymer to be crosslinked is greater than 25 ppm, the ink is too viscous for proper working and, at 140 ppm, there is gelation of the ink. Thus, according to the preferred embodiment of the invention, the sequestering agent is added in such an amount which is greater than or equal to what is necessary in masking the metal ions such as ferric ions thereby allowing them to be present in an amount of 20 ppm at most, and preferably 15 ppm at most, and which is also smaller than or equal to what is necessary in keeping the condition in which the electrocoagulation of the ink takes place.

The concentration of the metal ions in the ink such as ferric ions increases with the electrocoagulation printing time, reaching as high as several hundred ppm, but adding the sequestering agent produces the condition where metal ions exist in as little amount as 20 ppm at most, and enables metal ions to cause electrocoagulation of the ink while keeping this condition.

The sequestering agent used is preferably a chelating agent which forms ring structures incorporating the metal ions as central metal atoms. Such a ring formation increases the stability of the metal-chelating agent bonding. A preferred class of chelating agents comprises polyaminocarboxylic acids and their salts. Examples of polyaminocarboxylic acids include ethylenediaminetetraacetic acid (EDTA), iminodiacetic acid(IDA), hydroxyethyliminodiacetic acid (HIDA), ethylene-bis(hydroxyphenyl)glycine (EHPG), hydroxyethyl-ethylenediamine-triacetic acid (HEDTA), nitrilotriacetic acid (NTA), ethylene-bis(oxyethylenenitrilo)tetraacetic acid (EGTA), cyclohexanediaminetetraacetic acid (CyDTA), diethylenetriaminepentaacetic acid (DTPA), and triethylenetetraminehexaacetic acid (TTHA). Particularly preferred chelating agents are EDTA and its salts which are readily available at low cost. These chelating agents are preferably used in an amount of 0.01 to 0.3% by weight, or more preferably in an amount of 0.01 to 0.2% by weight, based on the total weight of the ink.

Meanwhile, in the case of long term printing in the electrocoagulation printing, the amount of metal ions in the ink more increases in contrast to the case of short term printing as aforementioned. Hence it is preferable to prepare inks for long term and short term printing which contain a different amount of a chelating agent. Examples of the ink used for short term printing include "working ink" used in the case where a printing operation is finished, for example, in about one hour without supplying ink. The inks used for long term printing are classified, for example, into "starting ink" used for the starting of a continuous printing lasting several hours with intermittent additions of ink and "replenishing ink" which is added to the starting ink during printing and is used for replenishing.

These "working ink" and "starting ink" are fundamentally the same types of ink from the viewpoint that they are used at the start of printing. The amount of polyaminocarboxylic acid or its salts used in these inks is 0.01 to 0.2% by weight based on the total weight of the ink. In consideration of each time during which both inks are used, preferably the amount of polyaminocarboxylic acid or its salts is 0.03 to 0.1% by weight in the case of the working ink and 0.02 to 0.1% by weight in the case of the starting ink. On the other hand, in the case of the replenishing ink, the amount of polyaminocarboxylic acid or its salts used in the ink is preferably 0.1 to 0.3% by weight and more preferably 0.15 to 0.2% by weight based on the total weight of the ink in consideration of masking of metal ions contaminated in the ink.

Water is preferably used as the liquid medium, which dissolves or disperses the pigment, the dispersing agent for uniformly dispersing the pigment into the liquid medium, the electrolytically coagulable polymer, and the soluble electrolyte to provide a desired electrocoagulation printing ink.

Preferably the printing ink according to the present invention further comprises a biocidal agent for preventing the growth of bacteria, molds and the like. Preferable examples of the biocidal agent include sodium dehydroacetate, sodium benzoate, sodium pyridinethion-1-oxide, zinc pyridinethion-1-oxide, and amine salts of 1,2-benzisothiazoline-3-one or 1-benzisothiazoline-3-one. For example, use can be made of a biocidal agent sold by Gray Products under the trademark PARMETOL® K-50. The biocidal agent is preferably used in an amount of 0.01 to 2% by weight, or more preferably, 0.1 to 1% by weight, based on the total weight of the ink.

Other than the above compounds, various additives such as dyes, infrared-ray absorbing agents, UV-ray absorbing agents, fragrances, antioxidants, anti-foaming agents, silane coupling agents, plasticizers, flame retardants, moisture retentive agents, organic solvents, and surfactants may be optionally added as required according to the applications of the printing ink of the present invention.

The printing ink of the present invention is manufactured by mixing, dissolving and dispersing the aforementioned electrolytically coagulable polymer, soluble electrolyte, pigment, and dispersing agent which is an alkali metal salt of naphthalenesulfonic acid-formamide polycondensate of the general formula (I) and, as required, other additives such as the sequestering agent in the liquid medium. For the dispersion, a generally used dispersing machine such as a roller mill, ball mill, pebble mill, attritor, and sand mill may be used. A pigment dispersion comprising at least a pigment, dispersing agent and liquid medium and having a desired particle size distribution can be obtained by properly controlling the size of milling media of a dispersing machine, packing density of milling media, treating time for dispersion, discharging speed and viscosity of the pigment dispersion, and the like.

In the case where bulk particles and bubbles are contained in ink, it is desirable to remove them by filtration,

deaeration and the like, since they hinder electrocoagulation and decrease an image quality. Any conventionally known filter and deaerator may be used.

The hydrogen ion concentration (pH) of the ink produced in the above methods is preferably in a range from 3 to 8, more preferably from 3 to 6, and most preferably from 4 to 5 when measured at 25°C. When the pH is out of the range from 3 to 8, the optical density of the coagulated ink transferred onto a substrate decreases. A conventionally known acid or alkali such as hydrochloric acid, sulfuric acid, acetic acid, sodium hydroxide, potassium hydroxide, and ammonium hydroxide may be used as the pH adjusting agent to adjust the pH of the ink.

A preferred ink formulation of the present invention for use as a working, starting or replenishing ink consists essentially of an aqueous liquid dispersion having a pH of 3 to 8 and containing 60 to 80% by weight of water, 4 to 15% by weight of an electrolytically coagulable polymer, 5 to 10% by weight of a soluble electrolyte, 5 to 20% by weight of a pigment, 0.05 to 5% by weight of an alkali metal salt of a naphthalenesulfonic acid-formamide polycondensate of the general formula (I) 0.01 to 0.3% by weight of polyaminocarboxylic acid or a salt thereof and 0.01 to 2% by weight of a biocidal agent, based on the total weight of the ink.

Next, a method for using the ink of the present invention will be explained.

Figure 1 is a schematic illustration of an electrocoagulation printing apparatus 1 for the printing using the ink of the present invention. The apparatus 1 is provided with a base plate 5 mounted on a plurality of foot sections 3. A plurality of flames 7 projecting upward is mounted on the base plate 5. A pair of vertical plates 9 is disposed at the upper portions of the flame 7. A revolving cylindrical positive electrode 11, which can be freely rotated by a driving motor (not shown), is sandwiched between the vertical plates 9. The positive electrode 11 is allowed to extend in a direction vertical to the paper in Figure 1 and has an active surface having a passive oxide film.

The electrocoagulation printing apparatus 1 also comprises coating means 13 along the positive electrode 11 for applying an oily substance such as an olefinic compound to the positive electrode active surface to form micro-droplets of the oily substance on the positive electrode active surface; ink supplying means 15 for supplying the ink of the present invention onto the positive electrode; and a print head 19 having negative electrodes 17 which forms, on the positive electrode active surface, a plurality of dots of colored, coagulated ink representative of a desired image by the electrocoagulation of the ink. The apparatus 1 further comprises removing means 21 such as a squeegee for removing non-coagulated ink from the positive electrode active surface. The electrocoagulation printing apparatus 1 also comprises a pressure roller 23 as means by which the resulting plurality of dots of the colored, coagulated ink formed on the positive electrode active surface and representative of a desired image are contacted with a substrate W to cause transfer of the dots of the colored, coagulated ink onto the substrate from the positive electrode active surface, thereby printing the image on the substrate.

A cleaning means 25 for cleaning the positive electrode active surface to remove any remaining coagulated ink from the positive electrode active surface is disposed below the positive electrode 11.

According to such a structure, micro-droplets of an oily substance is applied by the coating means 13 on the active surface of the revolving positive electrode 11 and the ink of the present invention is then supplied to the gap defined between negative electrodes 17 of the print head 19 and the positive electrode 11 by the ink supplying means 15. The supplied ink forms dots of coagulated ink by electrical energization of the positive and negative electrodes and the non-coagulated ink is removed from the positive electrode active surface by a squeegee 21.

Then, the substrate W is brought into contact with the dots of coagulated ink, formed on the positive electrode active surface, at the position between the positive electrode 11 and the pressure roller 23 to cause the transfer of the dots of coagulated ink onto the substrate W and thereby imprint the substrate.

A multicolor printing can be achieved by preparing a desired number of electrocoagulation printing apparatus 1 shown in Figure 1 and sequentially printing with electrocoagulation printing inks of desired colors in each electrocoagulation printing apparatus. For instance, process printing can be carried out by arranging four electrocoagulation printing apparatus 1 shown in Figure 1 in tandem and printing sequentially using yellow, cyan, red, and black inks in each apparatus.

The present invention will be explained in more detail by referring to the following examples, which, however, are not intended to limit the present invention, and variations thereto may be made without departing from the technical scope of the present invention.

EXAMPLE 1

A cyan colored ink composition useful as a working ink was prepared from the following ingredients:

| | |
|---|---|
| - Demineralized water | 72.18 wt.% |
| - Pigment sold under the trademark Hostaperm Blue B2G | 10.49 wt.% |
| - Anionic dispersing agent sold under the trademark CLOSPERSE 2500 | 1.78 wt.% |

(continued)

| | |
|---|---|
| - Anionic acrylamide polymer sold under the trademark ACCOSTRENGTH 86 | 6.99 wt.% |
| - Potassium chloride | 8.39 wt.% |
| - Disodium EDTA dihydrate sold under the trademark SEQUESTRENE NA2 | 0.03 wt.% |
| - Biocidal agent sold under the trademark PARMETOL K-50 | 0.14 wt.% |
| | 100.00 wt.% |

The pigment was first dispersed into the water with the dispersing agent, using a sand mill. The acrylamide polymer was then added to the resulting dispersion, followed by the addition of the potassium chloride and the biocidal agent. After the chelating agent SEQUESTRENE® NA2 was admixed, the solution was filtered and deaerated. The electrocoagulation printing ink thus obtained had a pH of 4.5 and a surface tension of $55 \cdot 10^{-5}$ N/cm (55 dyne/cm).

The above working ink was used in an electrocoagulation printing apparatus of the type described in the aforementioned U.S. Patent N° 4,895,629, shown in Fig.1. The viscosity of the ink during electrocoagulation printing was 360 mPas (360 cps) and remained substantially constant for a period of about 1 h. The coagulated ink transferred onto the substrate had an optical density of 1.45. The colored background formed on the substrate had an optical density of 0.02.

EXAMPLE 2

A yellow colored ink composition useful as a starting ink was prepared from the following ingredients:

| | |
|---|---|
| - Demineralized water | 71.18 wt.% |
| - Pigment sold under the trademark Permanent Yellow DGR | 11.72 wt.% |
| - Anionic dispersing agent sold under the trademark CLOSPERSE 2500 | 1.76 wt.% |
| - Anionic acrylamide polymer sold under the trademark ACCOSTRENGTH 86 | 6.90 wt.% |
| - Potassium chloride | 8.28 wt.% |
| - Disodium EDTA dihydrate sold under the trademark SEQUESTRENE NA2 | 0.02 wt.% |
| - Biocidal agent sold under the trademark PARMETOL K-50 | 0.14 wt.% |
| | 100.00 wt.% |

A yellow colored ink composition useful as a replenishing ink was also prepared from the following ingredients:

| | |
|---|---|
| - Demineralized water | 72.37 wt.% |
| - Pigment sold under the trademark Permanent Yellow DGR | 10.81 wt.% |
| - Anionic dispersing agent sold under the trademark CLOSPERSE 2500 | 1.62 wt.% |
| - Anionic acrylamide polymer sold under the trademark ACCOSTRENGTH 86 | 6.36 wt.% |
| - Potassium chloride | 8.55 wt.% |
| - Disodium EDTA dihydrate sold under the trademark SEQUESTRENE NA2 | 0.15 wt.% |
| - Biocidal agent sold under the trademark PARMETOL K-50 | 0.14 wt.% |
| | 100.00 wt.% |

Both the starting ink and the replenishing ink were prepared in the same manner as the working ink of Example 1. Both of the inks thus obtained had a pH of 4.3 and a surface tension of $55 \cdot 10^{-5}$ N/cm (55 dyne/cm).

The above starting ink was used to start a continuous printing lasting several hours, in the same electrocoagulation printing apparatus as in Example 1. As the level of the ink in the ink feeder diminished, the ink was replenished with the above replenishing ink to maintain a constant ink level. The ink viscosity was 350 mPas (350 cps) and remained substantially constant during the entire printing.

EXAMPLE 3

Example 1 was repeated with the exception that the pigment and the chelating agent in the working ink were respectively Permanent Rubine F6B and EDTA sold under the trademark SEQUESTRENE® AA. The working ink thus obtained had a viscosity of 380 mPas (380cps), a pH of about 4.2 and a surface tension of $47 \cdot 10^{-5}$ N/cm/ (47 dyne/cm). The ink viscosity during the printing using the electrocoagulation printing apparatus mentioned above remained

substantially constant during the entire printing. Essentially the same results as in Example 1 were obtained.

EXAMPLE 4

Example 1 was repeated with the exception that the pigment and the chelating agent in the working ink were respectively 8.00 wt.% of Carbon Black Monarch® 120 and 0.03 wt.% of DTPA sold under the trademark CHEL® DTPA, and the amounts of dispersing agent and demineralized water used were 0.31 wt.% and 76.14 wt.%, respectively. The working ink thus obtained had a viscosity of 370 mPas (370cps), a pH of 4.1 and a surface tension of $42 \cdot 10^{-5}$ N/cm (42 dyne/cm). The ink viscosity during the printing remained substantially constant during the entire printing. Essentially the same results as in Example 1 were obtained.

Comparative Example 1.

A working ink was prepared in the same manner as in Example 4 except that a nonionic dispersing agent sold by ICI Canada Inc. under the trademark of SOLSPERSE® 27000 was used as a dispersing agent. The viscosity, pH, and surface tension of the resulting working ink were 570 mPas (570 cps), 4.1. and $40 \cdot 10^{-5}$ N/cm (40 dyne/cm) respectively. A printing using this working ink was carried out using the aforementioned electrocoagulation printing apparatus. Some defects in an image caused by the gas generated at the negative electrodes during the electrocoagulation printing were observed on the substrate. The optical density of the coagulated ink transferred onto the substrate was as low as 1.25. The optical density of an undesirable colored background formed on the substrate was 0.07. In addition, after the ink had been left standing for 24 h, it was observed that pigment particles precipitated resulting in a phase separation requiring mechanical agitation to re-disperse the pigment in the ink.

COMPARATIVE EXAMPLE 2

A working ink was prepared in the same manner as in Example 4 except that a nonionic dispersing agent sold by ICI Canada Inc. under the trademark of SOLSPERSE® 20000 was used as a dispersing agent. The viscosity, pH, and surface tension of the resulting working ink were 800 mPas (800 cps), 4.1, and $25 \cdot 10^{-5}$ N/cm (25 dyne/cm) respectively. In a printing using this working ink and the aforementioned electrocoagulation printing apparatus, the optical density of the coagulated ink transferred onto the substrate was the same as in Example 4. However, some defects in an image caused by the gas generation at the negative electrodes during the electrocoagulation printing were observed on the substrate and the optical density of an undesirable colored background formed on the substrate was 0.22.

## Claims

1. An electrocoagulation printing ink consisting essentially of a liquid dispersion containing an electrolytically coagulable polymer, a liquid medium, a soluble electrolyte, a pigment and a dispersing agent, wherein said dispersing agent is an alkali metal salt of a naphthalenesulfonic acid-formaldehyde-polycondensate of the chemical formula (I):

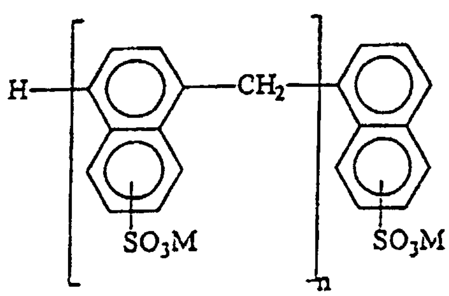

(I)

in which M is an alkali metal and n is an integer ranging from 2 to 15.

2. The electrocoagulation printing ink as claimed in claim 1, wherein said dispersing agent is present in an amount of from 0.05 to 5 % by weight, based on the total weight of the ink.

**3.** The electrocoagulation printing ink as claimed in claim 1 or claim 2, wherein in said dispersing agent of the general formula (I), M is sodium.

**4.** The electrocoagulation printing ink as claimed in any of the claims 1 to 3, further including a sequestering agent for complexing metal ions generated during electrocoagulation printing, said sequestering agent being present in an amount to prevent said metal ions from causing an undesirable increase in viscosity of said ink, without adversely affecting electrocoagulation of said polymer.

**5.** The electrocoagulation printing ink as claimed in claim 4, wherein said sequestering agent is a chelating agent and is present in an amount of from 0.01 to 0.3 % by weight, based on the total weight of the ink.

**6.** The electrocoagulation printing ink as claimed in claims 4 and 5, wherein the sequestering agent is a polyaminocarboxylic acid or a salt thereof.

**7.** An electrocoagulation printing ink consisting essentially of an aqueous liquid dispersion having a pH of from 3 to 8 and containing from 60 to 80 % by weight of water, from 4 to 15 % by weight of an electrolytically coagulable polymer selected from the group consisting of albumin, gelatin, casein, agar, polyacrylic acid, polyacrylamide and polyacrylic acid hydrazide, from 5 to 10 % by weight of a soluble electrolyte, from 5 to 20 % by weight of a pigment, from 0.05 to 5 % by weight of an alkali metal salt of a naphthalenesulfonic acid-formaldehyde-polycondensate of the general formula (I)

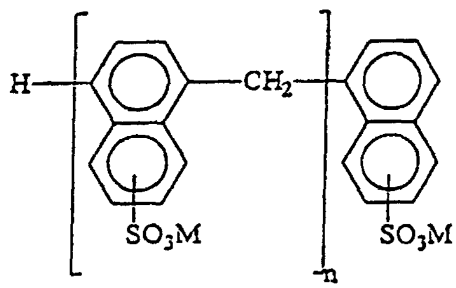

(I)

in which M is an alkali metal and n is an integer ranging from 2 to 15, from 0.01 to 0.3 % by weight of polyaminocarboxylic acid or salts thereof, and from 0.01 to 2 % by weight of a biocidal agent, based on the total weight of the ink.

**8.** The electrocoagulation printing ink as claimed in claim 7, wherein in said dispersing agent of the general formula (I), M is sodium.

**9.** The electrocoagulation printing ink as claimed in any of claims 1 to 8, wherein the surface tension is $30 \cdot 10^{-5}$ N/cm [30 dyn/cm] or greater at 25 °C.

**10.** An electrocoagulation printing method utilizing the electrocoagulation printing ink of any of the claims 1 to 9.

**11.** A printed matter printed by the electrocoagulation printing ink of any of the claims 1 to 9.

**Patentansprüche**

**1.** Elektrokoagulations-Druckfarbe, bestehend im wesentlichen aus einer flüssigen Dispersion, die ein elektrolytisch koagulierbares Polymer, ein flüssiges Medium, einen löslichen Elektrolyten, ein Pigment und ein dispergierendes Mittel enthält, worin das dispergierende Mittel ein Alkalimetall-Salz eines Naphthalinsulfonsäure-Formaldehyd-Polykondensats der chemischen Formel (I) ist:

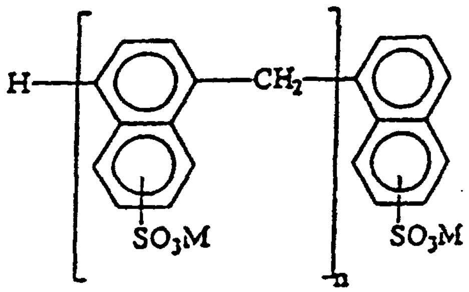

(I)

worin M ein Alkalimetall ist und n eine ganze Zahl im Bereich von 2 bis 15 ist.

2. Elektrokoagulations-Druckfarbe nach Anspruch 1, worin das dispergierende Mittel in einer Menge von 0,05 bis 5 Gew.-% zugegen ist, bezogen auf das Gesamtgewicht der Farbe.

3. Elektrokoagulations-Druckfarbe nach Anspruch 1 oder Anspruch 2, worin in dem dispergierenden Mittel der allgemeinen Formel (I) M Natrium ist.

4. Elektrokoagulations-Druckfarbe nach einem der Ansprüche 1 bis 3, weiter einschließend ein sequestrierendes Mittel zum Komplexieren von Metall-Ionen, die während des Elektrokoagulations-Druckens gebildet werden, wobei das sequestrierende Mittel in einer solchen Menge zugegen ist, daß es verhindert, daß die Metall-Ionen einen unerwünschten Anstieg der Viskosität der Farbe erzeugen, ohne in nachteiliger Weise eine Elektrokoagulation des Polymers zu beeinträchtigen.

5. Elektrokoagulations-Druckfarbe nach Anspruch 4, worin das sequestrierende Mittel ein chelatisierendes Mittel ist und in einer Menge von 0,01 bis 0,3 Gew.-% zugegen ist, bezogen auf das Gesamtgewicht der Farbe.

6. Elektrokoagulations-Druckfarbe nach einem der Ansprüche 4 und 5, worin das sequestrierende Mittel eine Polyaminocarbonsäure oder ein Salz davon ist.

7. Elektrokoagulations-Druckfarbe, bestehend im wesentlichen aus einer wäßrigen flüssigen Dispersion mit einem pH-Wert von 3 bis 8 und enthaltend 60 bis 80 Gew.-% Wasser, 4 bis 15 Gew.-% eines elektrolytisch koagulierbaren Polymers, das gewählt ist aus der Gruppe bestehend aus Albumin, Gelatine, Casein, Agar, Polyacrylsäure, Polyacrylamid und Polyacrylsäure-Hydrazid, 5 bis 10 Gew.-% eines löslichen Elektrolyten, 5 bis 20 Gew.-% eines Pigments, 0,05 bis 5 Gew.-% eines Alkalimetall-Salzes eines Naphthalinsulfonsäure-Formaldehyd-Polykondensats der allgemeinen Formel (I)

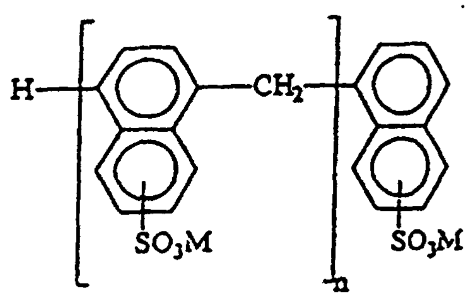

(I)

worin M ein Alkalimetall ist und n eine ganze Zahl im Bereich von 2 bis 15 ist, 0,01 bis 0,3 Gew.-% einer Polyaminocarbonsäure oder eines Salzes davon und 0,01 bis 2 Gew.-% eines bioziden Mittels, bezogen auf das Gesamtgewicht der Farbe.

8. Elektrokoagulations-Druckfarbe nach Anspruch 7, worin in dem dispergierenden Mittel der allgemeinen Formel (I) M Natrium ist.

**9.** Elektrokoagulations-Druckfarbe nach einem der Ansprüche 1 bis 8, worin die Oberflächenspannung bei 25 °C 30 $\cdot 10^{-5}$ N/cm [30 dyn/cm] oder höher ist.

**10.** Elektrokoagulations-Druckverfahren, das Gebrauch macht von der Elektrokoagulations-Druckfarbe nach einem der Ansprüche 1 bis 9.

**11.** Drucksache, die gedruckt ist mit der Elektrokoagulations-Druckfarbe nach einem der Ansprüche 1 bis 9.

## Revendications

**1.** Une encre d'impression à électrocoagulation, constituée essentiellement d'une dispersion liquide contenant un polymère coagulable électrolytiquement, un milieu liquide, un électrolyte soluble, un pigment et un agent dispersant, dans lequel ledit agent dispersant est un sel de métal alcalin d'un polycondensat d'acide naphtalène sulfonique-formaldéhyde de formule chimique (I) :

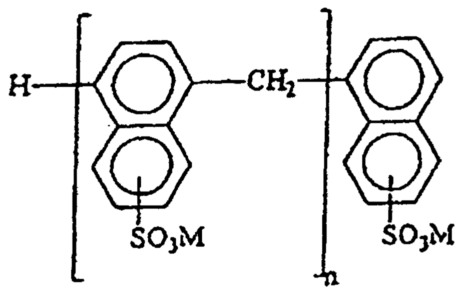

(I)

dans laquelle M est un métal alcalin et n est un entier compris entre 2 et 15.

**2.** L'encre d'impression à électrocoagulation selon la revendication 1, dans laquelle ledit argent dispersant est présent en une quantité comprise entre 0,05 et 5 % en poids, basé sur le poids total de l'encre.

**3.** L'encre d'impression à électrocoagulation selon la revendication 1 ou la revendication 2, dans laquelle, dans ledit agent dispersant de la formule générale (I), M est le sodium.

**4.** L'encre d'impression à électrocoagulation selon l'une quelconque des revendications 1 à 3, comprenant en outre un agent séquestrant pour obtenir la complexation des ions métalliques générés durant l'impression à électrocoagulation, ledit agent séquestrant étant présent en une quantité permettant d'empêcher que les ions métalliques ne provoquent une augmentation indésirable de la viscosité de ladite encre, sans affecter de façon nuisible l'électrocoagulation dudit polymère.

**5.** L'encre d'impression à électrocoagulation selon la revendication 4, dans laquelle ledit agent séquestrant est un agent chelatant et est présent en une quantité allant de 0,01 à 0,3 % en poids, basé sur le poids total de l'encre.

**6.** L'encre d'impression à électrocoagulation selon les revendications 4 et 5, dans laquelle l'agent séquestrant est un acide polyaminocarboxylique ou un sel de celui-ci.

**7.** L'encre d'impression à électrocoagulation composée essentiellement d'une dispersion de liquide aqueuse, d'un pH compris dans la plage de 3 à 8 et contenant de 60 à 80 % en poids d'eau, de 4 à 15 % en poids de polymère coagulable électrolytiquement, sélectionné dans le groupe constitué de l'albumine, de la gélatine, de la caséine, de l'agar, de l'acide polyacrylique, du polyacrylamide et de l'hydrazide d'acide polyacrylique, de 5 à 10 % en poids d'un électrolyte soluble, de 5 à 20 % en poids d'un pigment, de 0,05 à 5 en poids d'un sel de métal alcalin d'un polycondensat acide naphtalène sulfonique formaldéhyde de formule chimique (I) :

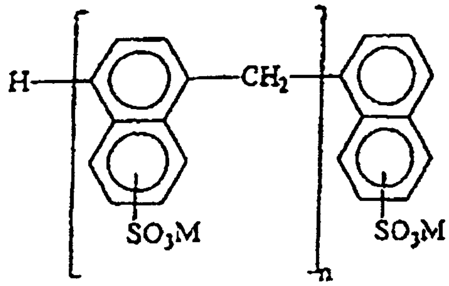

(I)

dans laquelle M est un métal alcalin et n est un entier compris entre 2 et 15, de 0,01 à 0,3 % en poids d'acide polyaminocarboxylique, ou bien de ses sels, et de 0,01 à 2 % en poids d'un agent biocide, basé sur le poids total de l'encre.

**8.** L'encre d'impression à électrocoagulation selon la revendication 7 dans laquelle, dans ledit agent dispersant de la formule générale (I), M est le sodium.

**9.** L'encre d'impression à électrocoagulation selon l'une quelconque des revendications 1 à 8, dans laquelle la tension de surface est de $30 \cdot 10^{-5}$ N/cm [30 dyn/cm] ou plus, à 25°C.

**10.** Une méthode d'impression par électrocoagulation utilisant l'encre d'impression à électrocoagulation selon l'une quelconque des revendications 1 à 9.

**11.** Une matière imprimée, imprimée par l'encre d'impression à électrocoagulation selon l'une des revendications 1 à 9.

FIG. 1